# EUROPÄISCHE PATENTSCHRIFT

(11) **EP 1 841 981 B1**
(45) Veröffentlichungstag und Bekanntmachung des Hinweises auf die Patenterteilung: **16.12.2009**
(21) Anmeldenummer: 06707745.3
(22) Anmeldetag: 18.01.2006
(51) Int. Cl.: F16D 65/18

(54) **SCHEIBENBREMSE**
DISK BRAKE
FREIN A DISQUE

(30) Priorität: 18.01.2005 DE 102005002415; 30.09.2005 DE 102005046805
(43) Veröffentlichungstag der Anmeldung: 10.10.2007
(73) Patentinhaber: Continental Teves AG & Co. oHG, 60488 Frankfurt am Main (DE)
(72) Erfinder: PETRI, Ralph, 65843 Sulzbach/ts. (DE)
(86) Internationale Anmeldenummer: PCT/EP2006/050285
(87) Internationale Veröffentlichungsnummer: WO 2006/077226

(56) Entgegenhaltungen:
- DE-A1- 1 805 450
- US-B1- 6 264 010

## Beschreibung

Die Erfindung betrifft eine Scheibenbremse mit einer Welle zur Betätigung, die in einem Gehäuse drehbar sowie axial verschiebbar gelagert ist und mit einem Wellenende eine Gehäuseöffnung durchgreift, wobei an dem Wellenende ein Betätigungselement angeordnet ist. Weiterhin ist ein Dichtmittel mit einem Dichtungsabschnitt vorgesehen, welcher elastisch eine zugeordnete Dichtfläche beaufschlagt. In Folge einer axialen Bewegung der Welle ist der Dichtungsabschnitt quer zur Axialbewegung der Welle auf der zugeordneten Dichtfläche bewegbar und mit einem Anschlag begrenzt, wobei der Dichtungsabschnitt einen Spalt zwischen der Dichtfläche und dem Gehäuse zwecks Abdichtung verschließt.

Aus der gattungsbildenden DE 101 04 158 A1 ist ein kombinierter Scheibenbremssattel bekannt. Ein Dichtungsabschnitt wirkt zwischen dem Gehäuse und einem an der Welle befestigten Betätigungselement. Dabei weist das Betätigungselement eine zusätzliche Hülse auf, auf welcher der Dichtungsabschnitt in Form einer Dichtlippe elastisch aufsitzt und gleitet. Für eine Aktivierung einer Feststellbremsfunktion führt die Welle zusammen mit dem Betätigungselement eine Drehbewegung sowie eine Axialbewegung in Relation zu dem Gehäuse aus. Insbesondere die Axialbewegung beeinträchtigt die Dichtfunktion, denn sie verursacht eine Radialbewegung zwischen Dichtungsabschnitt und Dichtfläche. Zyklische Radialbewegungen können dazu führen, dass Schmutz sukzessiv von dem Dichtungsabschnitt in das Gehäuseinnere gefördert wird. Als besonders nachteilig ist ein zusätzlicher Aufwand für Fertigung und Montage von Betätigungselement und Hülse anzusehen, da dadurch der Produktionsaufwand und die -kosten erhöht sind.

Ausgehend davon ist es eine Aufgabe der Erfindung, eine Bremsscheibe mit einem Dichtmittel anzugeben, die einfach aufgebaut ist und bei allen Betriebsbedingungen eine verbesserte Dichtwirkung gewährleistet.

Erfindungsgemäß wird die Aufgabe dadurch gelöst, dass der Anschlag, die Dichtfläche und das Betätigungselement einstückig ausgeführt sind. Durch diese Maßnahme werden die Produktionskosten entscheidend gesenkt, da sich die Bauteilkomplexität verringert und somit die Montage vereinfacht wird. Gesonderte Bauteile, Hülsen oder ähnliches sind nicht erforderlich.

In einer vorteilhaften Ausführung der Erfindung ist der Anschlag umlaufend an dem Betätigungselement vorgesehen. Dadurch wird sichergestellt, dass der Dichtungsabschnitt des Dichtmittels über den gesamten Umfang hinsichtlich einer möglichen Querbewegung auf dem Betätigungselement fixiert ist und so eine optimale Abdichtung erreicht wird.

Damit bei einer Axialbewegung der Welle sich kein Spalt zwischen Dichtungsabschnitt und dem Betätigungselement öffnet, liegt der Anschlag radial weiter außen als der Dichtungsabschnitt. Ein Abstand (B) zwischen Anschlag und Welle ist also größer als ein Abstand (A) zwischen Dichtungsabschnitt und Welle. Durch diese geometrische Konstellation von Anschlag und Dichtungsabschnitt wird erreicht, dass bei jeder Axialbewegung der Welle statt einer Querbewegung eine Stauchung des Dichtungsabschnitts hervorgerufen und einer Schlitzbildung entgegen gewirkt wird.

In einer weiteren Ausführung der Erfindung ist der Anschlag als rohrförmiger Vorsprung ausgebildet, welcher in Richtung des Gehäuses vorsteht. Dies birgt den Vorteil, dass der rohrförmige Vorsprung für den Dichtungsabschnitt als Ablaufrinne und Prallschutz dient und den Dichtungsabschnitt vor Spritzwasser, Schmutz und Schlägen schützt.

Eine vorteilhafte Weiterentwicklung der Erfindung beinhaltet, dass der Anschlag von einer Flanke einer Ausnehmung gebildet ist. Diese in das Betätigungselement eingebrachte Ausnehmung nimmt einen Teil des Dichtungsabschnitts auf und eine Flanke fungiert als Anschlag, wodurch eine Querbewegung des Dichtungsabschnitts verhindert wird. Da die Ausnehmung den Dichtungsabschnitt radial in zwei Richtungen fixieren kann, ergibt sich der sehr günstige Bonuseffekt, dass ein Einknicken des Dichtungsabschnitts in Richtung der Welle verhindert wird. Dadurch wird die Dichtwirkung unter allen Umständen aufrechterhalten.

Die Lehre einer besonders günstigen Ausprägungsform der Erfindung besteht darin, das Dichtmittel mit einem weiteren Dichtungsabschnitt zu versehen, welcher eine zugeordnete Dichtfläche an der Welle elastisch beaufschlagt. Weiterhin ist die Dichtfläche mit wenigstens einem Anschlag zur axialen Fixierung des Dichtungsabschnitts versehen. Die redundante Anordnung von insgesamt zwei Dichtungsabschnitten ermöglicht eine Verbesserung der Dichtigkeit und eine Erhöhung der Lebensdauer.

Vorteilhafter Weise kann der Anschlag auf der Welle als eine eingebrachte, umlaufenden Nut dargestellt sein, welche den oben angeführten Dichtungsabschnitt axial fixiert. Eine Nut lässt sich ohne großen Aufwand bei der Herstellung der Welle einbringen, wodurch keine zusätzlichen Fertigungskosten verursacht werden. Der Dichtungsabschnitt ist gewissermaßen in die Nut eingeknöpft.

Zur weiteren Reduzierung der Fertigungskosten wird vorgeschlagen, die Anschläge an der Welle und/oder am Betätigungselement mittels spanloser Fertigungsverfahren herzustellen, insbesondere mittels Prägen oder Pressen.

Weitere Einzelheiten der Erfindung gehen aus den Zeichnungen anhand der Beschreibung hervor.

In der Zeichnung zeigt
- Fig. 1: eine Scheibenbremse teilweise sowie im Schnitt in größerem Maßstab, wobei ein rohrförmiger Vorsprung als Anschlag fungiert und
- Fig. 2: eine Ausführungsform der Erfindung, wobei ein Anschlag von einer Flanke einer Ausnehmung ausgebildet ist.

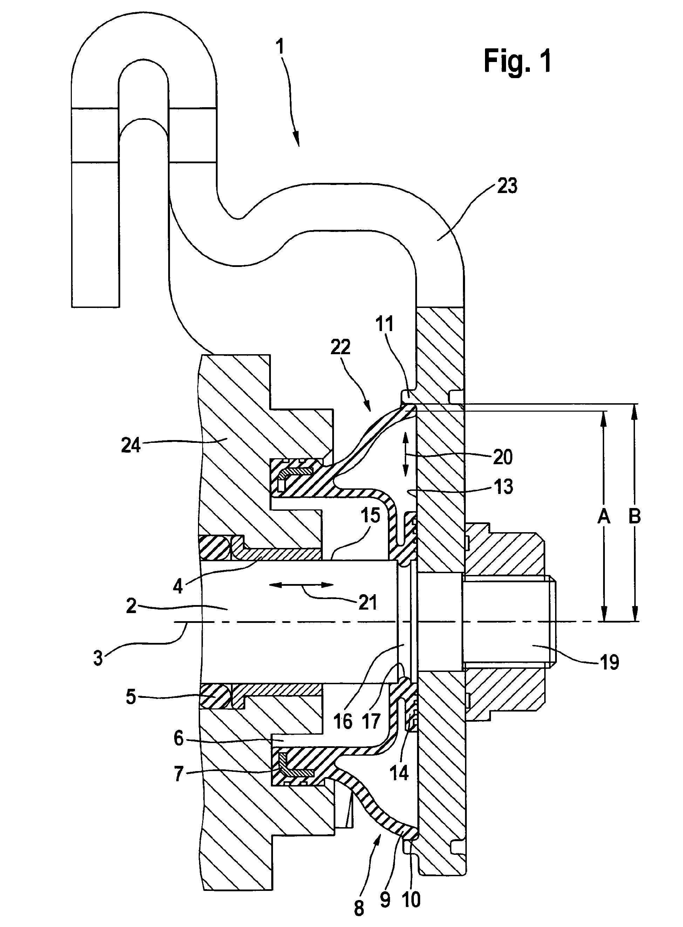

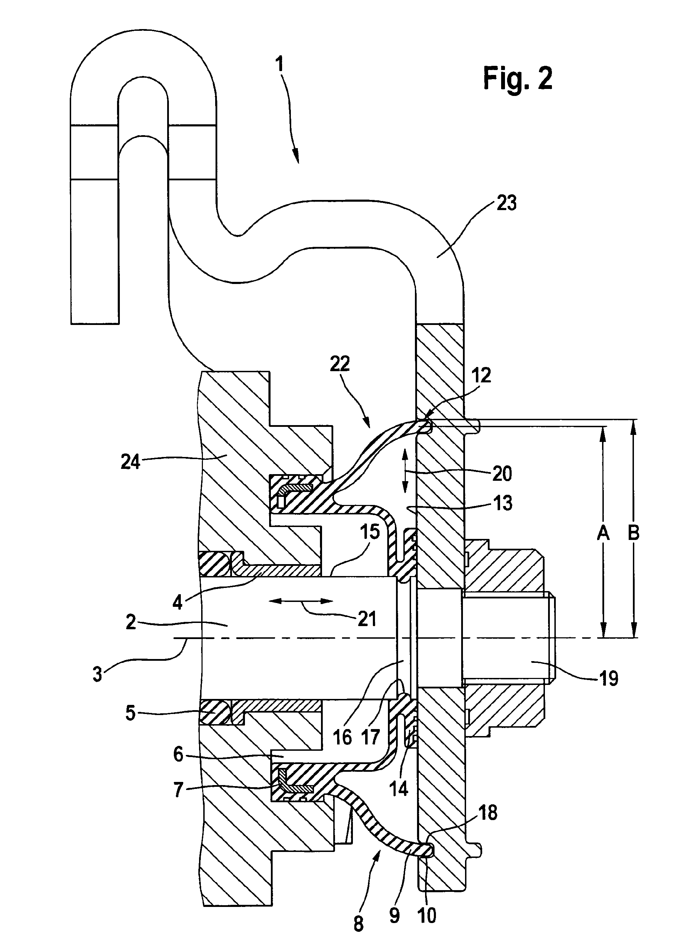

Eine erfindungsgemäße Scheibenbremse wird in Verbindung mit der Fig. 1 und 2 erläutert. Dabei ist nur ein wesentlicher Teil eines kombinierten Scheibenbremssattels gezeigt. Die beiden Figuren zeigen unterschiedliche Ausführungsformen, wobei übereinstimmende Merkmale mit den gleichen Bezugszahlen versehen sind.

Grundsätzlich kommt eine solche Scheibenbremse 1 bei kombinierten Scheibenbremssätteln zum Einsatz, die sowohl eine Betriebsbrems- als auch eine Feststellbremsbetätigung zulassen. Solche kombinierte Scheibenbremssättel weisen häufig eine Welle 2 auf, die mit einem Wellenende 19 das Gehäuse 24 durchgreift. Die Welle 2 wirkt häufig innerhalb des Gehäuses 24 insbesondere mit einer nicht gezeigten Rampenvorrichtung oder einer Exzentervorrichtung zur Feststellbremsbetätigung zusammen. Die Lagerung der Welle 2 im Gehäuse 24 erfolgt mittels einer Gleithülse 4. Da in einem Innenraum des Gehäuses 24 ein unter Druck stehendes Arbeitsmedium vorhanden ist, ist an der Gleithülse 4 eine Dichtung 5 zwischen Gehäuse 24 und Welle 2 verbaut, die eine Leckage des Arbeitsmediums verhindert. Außerhalb des Gehäuses 24 ist am Wellenende 19 der Welle 2 ein Betätigungselement 23 befestigt, um eine Betätigungskraft in das Gehäuse 24 des kombinierten Scheibenbremssattels einleiten zu können.

Fig. 1 zeigt weiterhin eine erste Ausführungsform der erfindungsgemäßen Scheibenbremse 1 mit einem Dichtmittel 22. Diese umfasst im Wesentlichen zwei Dichtungsabschnitte 8,14, eine axiale Dichtfläche 13 an dem Betätigungselement 23 und eine radiale Dichtfläche 15 auf der Welle 2. Das Dichtmittel 22 umschließt die Welle 2 ringförmig und ist in einer Gehäusenut 6 drehbar angeordnet. Im Dichtmittel 22 ist ein Spannelement 7 vorgesehen, welches das Dichtmittel 22 in der Gehäusenut 6 verspannt. Der Dichtungsabschnitt 14 schließt einen Spalt zwischen dem Gehäuse 1 und der Welle 2 dichtend ab, wobei der Dichtungsabschnitt 14 an der Dichtfläche 15 auf der Welle 2 anliegt und von einem Anschlag 17 in axialer Richtung festgehalten wird. Gemäß diesem Ausführungsbeispiel wird der Anschlag 17 von einer umlaufenden Nut 16 in der Welle 2 gebildet. Denkbar sind auch Wellenabsätze oder sonstige Vorsprünge auf der Welle, welche als axial fixierende Anschläge fungieren. Um die Dichtwirkung des Dichtungsabschnitts 14 weiter zu verbessern, liegt dieser zudem an der axialen Dichtfläche 13 an, wobei die Wirkfläche des Dichtungsabschnitts 14 als Labyrinthdichtung ausgebildet ist.

Der Dichtungsabschnitt 8 liegt sowohl an der axialen Dichtfläche 13 als auch an dem Anschlag 10 an und verschließt so einen Spalt zwischen dem Betätigungselement 23 und dem Gehäuse 1. Dabei ist der Dichtungsabschnitt 8 als Dichtlippe 9 ausgebildet. Entscheidend hierbei ist, dass der Abstand B zwischen dem Anschlag 10 und einer Achse 3 der Welle 2 größer ist als ein Abstand A zwischen dem Dichtungsabschnitt 8 und der Achse 3. Im vorliegenden Fall ist der Anschlag 10 an einem rohrförmigen Vorsprung 11 angeordnet, welcher umformtechnisch aus dem Betätigungselement 23 herausgebildet ist. Bei der Fertigung des Vorsprungs 11 wird bevorzugt im selben Umformprozess auch die Dichtfläche 13 erzeugt.

Die Funktion der Dichtvorrichtung aus Fig. 1 wird im Folgenden dargelegt. Die Welle 2 und das Betätigungselement 23 sind drehbar sowie axial verschiebbar im Gehäuse 24 gelagert und dienen der Übertragung einer Betätigungskraft, wenn eine Feststellbremsfunktion gefordert ist. Bei Betätigung der Feststellbremse werden die Welle 2 und das Betätigungselement 23 gedreht. Die Bauteile 2,23 führen gleichzeitig eine Axialbewegung 20 aus. Weil das Dichtmittel 22 im Gehäuse 24 fest angeordnet ist, üben die Welle 2 und das Betätigungselement 23 relativ zu den Dichtungsabschnitten 8 und 14 eine Relativbewegung aus.

Damit der Dichtungsabschnitt 14 nicht axial auf der Welle 2 wandert, ist auf der Welle 2 eine Nut 16 vorgesehen. Diese stellt sicher, dass der Dichtungsabschnitt 14 die Axialbewegung 20 der Welle 2 nachvollzieht. Gleichzeitig wird eine Drehbewegung zwischen Welle 2 und Dichtungsabschnitt 14 zugelassen. Auf diese Weise wird auch gewährleistet, dass der Dichtungsabschnitt 14 stets an der Dichtfläche 15 auf der Welle 2 und an der Dichtfläche 13 am Betätigungselement 13 wirksam ist.

Die Dichtlippe 9 des Dichtungsabschnitts 8 liegt am Anschlag 10 und an der Dichtfläche 13 des Betätigungselements 23 an und gleitet aufgrund der Drehbewegung des Betätigungselements 23 auf der Dichtfläche 13 und am Anschlag 10. Da die Welle 2 und das Betätigungselement 23 eine Axialbewegung 20 vollführen und der Anschlag 10 eine Radialbewegung 20 der Dichtlippe 9 auf der Dichtfläche 13 verhindert, wird der Dichtungsabschnitt 8 an dem Anschlag 10 gestaucht. So wird einerseits unterbunden, dass die Dichtlippe 9 durch eine Radialbewegung 20 Schmutz und Ablagerungen in die Dichtvorrichtung befördert. Andererseits wird durch die Stauchung ein Anpressdruck zwischen Dichtfläche 13, Anschlag 10 und Dichtlippe 9 erzeugt, was zu einer Verbesserung der Dichtwirkung beiträgt. Gleichzeitig wirkt der als Vorsprung 11 ausgebildete Anschlag 10 als Ablaufrinne und Prallschutz für die Dichtlippe 9 und hält so Schmutz und eindringende Feuchtigkeit ab.

Ein zweites Ausführungsbeispiel wird in Zusammenhang mit Fig. 2 erläutert. Da der grundlegende Aufbau beider Ausführungsbeispiele gleich ist, wird im Folgenden nur auf die Unterschiede eingegangen. Diese liegen darin, dass der Anschlag 10 nicht von einem Vorsprung 11 (Fig. 1), sondern von einer Flanke einer Ausnehmung 12 gebildet ist. Zur Herstellung dieser Ausnehmung 12 können umformtechnische Verfahren, wie Prägen oder Pressen angewendet werden, welche grundsätzlich weniger kostenintensiv als spanende Fertigungsverfahren sind.

Zur Erörterung der Funktionsweise des Ausführungsbeispiels aus Fig. 2 sei auf die Beschreibung der Fig. 1 verwiesen, jedoch gilt festzuhalten, dass die Ausprägung des Anschlags 10 als Ausnehmung 12 hinsichtlich der Funktion folgenden Vorteil aufweist. Da die Ausnehmung 12 einen Teil der Dichtlippe 9 des Dichtungsabschnitts 8 aufnimmt, wird eine Radialbewegung 20 auf dem Betätigungselement 23 komplett unterbunden, da die Dichtlippe an beiden Flanken der Aushebung 12 anliegt. Die von der Achse 3 weg zeigende Flanke der Ausnehmung 12 übernimmt die Funktion des Anschlags 10 und die zur Achse 3 weisende Flanke der Ausnehmung 12 bildet einen weiteren Anschlag 18. Dieser verhindert, dass der Dichtungsabschnitt 8 bzw. die Dichtlippe 9 zu Welle 2 hin einknicken kann. Dadurch wird die Dichtwirkung des Dichtmittels 22 und die Sicherheit gegen Einknicken erheblich verbessert.

### Bezugszeichenliste

- 1: Scheibenbremse
- 2: Welle
- 3: Achse
- 4: Gleithülse
- 5: Dichtung
- 6: Gehäusenut
- 7: Spannelement
- 8: Dichtungsabschnitt
- 9: Dichtlippe
- 10: Anschlag
- 11: Vorsprung
- 12: Ausnehmung
- 13: Dichtfläche
- 14: Dichtungsabschnitt
- 15: Dichtfläche
- 16: Nut
- 17: Anschlag
- 18: Anschlag
- 19: Wellenende
- 20: Radialbewegung
- 21: Axialbewegung
- 22: Dichtmittel
- 23: Betätigungselement
- 24: Gehäuse

- A: Abstand Achse-Dichtungsabschnitt
- B: Abstand Achse-Anschlag

## Patentansprüche

1. Scheibenbremse (1) mit einer Welle (2) insbesondere zur Betätigung einer Feststellbremse, die in einem Gehäuse (24) drehbar und axial verschiebbar gelagert ist und mit einem Wellenende (19) eine Gehäuseöffnung durchgreift, wobei am Wellenende (19) ein Betätigungselement (23) angeordnet ist, mit einem Dichtmittel (22), umfassend einen Dichtungsabschnitt (8), welcher elastisch eine zugeordnete Dichtfläche (13) beaufschlagt und in Folge einer Axialbewegung (21) der Welle (2) auf der Dichtfläche (13) quer zur Axialbewegung (21) der Welle (2) bewegbar ist und mit einem Anschlag (10) begrenzt ist, wobei der Dichtungsabschnitt (8) einen Spalt zwischen einer Dichtfläche (13) und dem Gehäuse (24) zwecks Abdichtung verschließt, **dadurch gekennzeichnet, dass** der Anschlag (10), die Dichtfläche (13) und das Betätigungselement (23) einstückig ausgeführt sind.

2. Scheibenbremse (1) nach Anspruch 1, **dadurch gekennzeichnet, dass** der Anschlag (10) an dem Betätigungselement (23) angeordnet ist und umlaufend vorgesehen ist.

3. Scheibenbremse (1) nach Anspruch 1 und 2, **dadurch gekennzeichnet, dass** ein Abstand (B) zwischen dem Anschlag (10) und der Welle (2) größer ausgebildet ist als ein Abstand (A) zwischen dem Dichtungsabschnitt (8) und der Welle (2).

4. Scheibenbremse (1) nach Anspruch 1 bis 3, **dadurch gekennzeichnet, dass** der Anschlag (10) als rohrförmiger Vorsprung (11) ausgebildet ist und in Richtung des Gehäuses (24) vorsteht.

5. Scheibenbremse (1) nach Anspruch 1 und 2, **dadurch gekennzeichnet, dass** der Anschlag (10) von einer Flanke einer Ausnehmung (12) gebildet ist.

6. Scheibenbremse (1) nach Anspruch 1, **dadurch gekennzeichnet, dass** das Dichtmittel (22) einen weiteren Dichtungsabschnitt (14) aufweist, welcher elastisch eine zugeordnete Dichtfläche (15) an der Welle (2) beaufschlagt, und dass die Dichtfläche (15) wenigstens einen Anschlag (17) zur axialen Fixierung des Dichtungsabschnitts (14) ausweist.

7. Scheibenbremse (1) nach Anspruch 7, **dadurch gekennzeichnet, dass** der Anschlag (17) von einer in die Welle (2) eingebrachten, umlaufenden Nut (16) gebildet ist.

8. Scheibenbremse (1) nach einem oder mehreren voran gestellten Ansprüchen, **dadurch gekennzeichnet, dass** die Anschläge (10,17) mittels spanloser Fertigungsverfahren, wie insbesondere mittels Prägen oder Pressen hergestellt werden.

## Claims

1. Disc brake (1) having a shaft (2), in particular, for actuating a parking brake, which shaft (2) is mounted rotatably and axially displaceably in a housing (24) and reaches through a housing opening with one shaft end (19), an actuating element (23) being arranged on the shaft end (19), having a sealing means (22), comprising a seal section (8) which elastically loads an associated sealing face (13) and, as a consequence of an axial movement (21) of the shaft (2), can be moved on the sealing face (13) transversely with respect to the axial movement (21) of the shaft (2) and is limited by way of a stop (10), the seal section (8) closing a gap between a sealing face (13) and the housing (24) for the purpose of sealing, **characterized in that** the stop (10), the sealing face (13) and the actuating element (23) are configured in one piece.

2. Disc brake (1) according to Claim 1, **characterized in that** the stop (10) is arranged on the actuating element (23) and is provided circumferentially.

3. Disc brake (1) according to Claims 1 and 2, **characterized in that** a spacing (B) between the stop (10) and the shaft (2) is configured to be greater than a spacing (A) between the seal section (8) and the shaft (2).

4. Disc brake (1) according to Claims 1 to 3,
**characterized in that** the stop (10) is configured as a tubular projection (11) and protrudes in the direction of the housing (24).

5. Disc brake (1) according to Claims 1 and 2,
**characterized in that** the stop (10) is formed by a flank of a recess (12).

6. Disc brake (1) according to Claim 1, **characterized in that** the sealing means (22) has a further seal section (14) which elastically loads an associated sealing face (15) on the shaft (2), and **in that** the sealing face (15) has at least one stop (17) for axially fixing the seal section (14).

7. Disc brake (1) according to Claim 7, **characterized in that** the stop (17) is formed by a circumferential groove (16) which is made in the shaft (2).

8. Disc brake (1) according to one or more of the preceding claims, **characterized in that** the stops (10, 17) are produced by means of production processes without the removal of material, such as, in particular, by means of stamping or pressing.

## Revendications

1. Frein à disque (1) comprenant un arbre (2), en particulier pour l'actionnement d'un frein de stationnement, qui est monté de manière rotative et déplaçable axialement dans un boîtier (24), et qui vient en prise à travers une ouverture de boîtier avec une extrémité d'arbre (19), un élément d'actionnement (23) étant disposé sur l'extrémité d'arbre (19), avec un moyen d'étanchéité (22), comprenant une portion d'étanchéité (8) qui sollicite élastiquement une surface d'étanchéité associée (13) et qui peut être déplacée suite à un mouvement axial (21) de l'arbre (2) sur la surface d'étanchéité (13) transversalement au mouvement axial (21) de l'arbre (2), et qui est limitée par une butée (10), la portion d'étanchéité (8) fermant une fente entre une surface d'étanchéité (13) et le boîtier (24) en vue de réaliser l'étanchéité, **caractérisé en ce que** la butée (10), la surface d'étanchéité (13) et l'élément d'actionnement (23) sont réalisés d'une seule pièce.

2. Frein à disque (1) selon la revendication 1,
**caractérisé en ce que** la butée (10) est disposée sur l'élément d'actionnement (23) et est prévue circonférentiellement.

3. Frein à disque (1) selon les revendications 1 et 2, **caractérisé en ce qu'**une distance (B) entre la butée (10) et l'arbre (2) est réalisée plus grande qu'une distance (A) entre la portion d'étanchéité (8) et l'arbre (2).

4. Frein à disque (1) selon les revendications 1 à 3, **caractérisé en ce que** la butée (10) est réalisée sous forme de saillie tubulaire (11) et dépasse dans la direction du boîtier (24).

5. Frein à disque (1) selon les revendications 1 et 2, **caractérisé en ce que** la butée (10) est formée par un flanc d'un évidement (12).

6. Frein à disque (1) selon la revendication 1, **caractérisé en ce que** le moyen d'étanchéité (22) présente une autre portion d'étanchéité (14), qui sollicite élastiquement une surface d'étanchéité associée (15) sur l'arbre (2), et **en ce que** la surface d'étanchéité (15) présente au moins une butée (17) pour la fixation axiale de la portion d'étanchéité (14).

7. Frein à disque (1) selon la revendication 7, **caractérisé en ce que** la butée (17) est formée par une rainure (16) circonférentielle, pratiquée dans l'arbre (2).

8. Frein à disque (1) selon l'une quelconque ou plusieurs des revendications précédentes, **caractérisé en ce que** les butées (10, 17) sont fabriquées au moyen d'un procédé de fabrication sans enlèvement de copeaux, comme par exemple par gaufrage ou pressage.
